(19) Europäisches Patentamt
European Patent Office
Office européen des brevets

(11) EP 0 694 781 B1

(12) **EUROPÄISCHE PATENTSCHRIFT**

(45) Veröffentlichungstag und Bekanntmachung des Hinweises auf die Patenterteilung:
**15.12.1999 Patentblatt 1999/50**

(51) Int Cl.$^6$: **G01N 21/55**

(21) Anmeldenummer: **95111219.2**

(22) Anmeldetag: **18.07.1995**

(54) **Verfahren zur Kontrolle von Polykondensations- oder Polyadditionsreaktionen**

Method for the control of polycondensation or polyaddition reactions

Méthode de contrôle de reactions de polycondensation ou de polyaddition

(84) Benannte Vertragsstaaten:
**DE ES FR GB IT**

(30) Priorität: **29.07.1994 DE 4426944**

(43) Veröffentlichungstag der Anmeldung:
**31.01.1996 Patentblatt 1996/05**

(73) Patentinhaber: **BAYER AG**
**51368 Leverkusen (DE)**

(72) Erfinder:
• **Wolf, Udo, Dr.**
**D-47906 Kempen (DE)**
• **Schreckenberg, Manfred, Dr.**
**D-47802 Krefeld (DE)**

(56) Entgegenhaltungen:
**DE-A- 4 228 070        US-A- 4 798 954**

**Beschreibung**

Die Erfindung betrifft ein Verfahren zur Kontrolle von Polykondensations- oder Polyadditionsreaktionen durch Messung der OH-, NH- oder NCO-Gruppenzahl bzw. Säurezahl beteiligter Reaktionspartner mittels Infrarot-ATR-Spektroskopie der zugehörigen temperaturabhängigen Absorptionsbanden und Kompensation der Temperaturabhängigkeit durch Kalibrierung der Selbstabsorption des ATR-Meßkristalls.

Unter ATR-Spektroskopie (Abgeschwächte Total Reflexion) wird eine Analysentechnik verstanden bei der ein Infrarotstrahl in einem sogenannten ATR-Kristall bestehend aus einem Material mit großem Brechungsindex und kleiner Absorption ein- bzw. ausgekoppelt wird. Die zu analysierende Probe wird mit der Oberfläche des ATR-Kristalles in Kontakt gebracht. Aufgrund der Welleneigenschaften der IR-Strahlung dringt die IR-Strahlung in der Intensität exponentiell abfallend in die Probe ein und wird dort absorbiert. Die Absorption der Infrarotstrahlung wird analog zu einer Transmissionsmessung mit einem Fourier-Transform-IR-Spektrometer nachgewiesen.

Bei der Herstellung von verschiedenen Polykondensations- oder Polyadditionsprodukten ist zur Kontrolle des Reaktionsverlaufes die Bestimmung verschiedener Reaktionsparameter namentlich der OH-, NH- oder NCO-Gruppenzahl bzw. Säurezahl beteiligter Reaktionspartner, im Falle der Herstellung von Polyurethanen durch Polyaddition von Isocyanatgruppen mit Alkoholen, Carbonsäuren oder Aminen, oder im Falle der Polyesterharzlacke z.B. neben der Viskosität (Molekulargewicht) die Säurezahl (SZ) und die Hydroxylzahl (OH-Zahl; Einheit: mg KOH/g Probe), notwendig.

Eine übliche bekannte Methode zur Ermittlung von Säurezahl (SZ) und OH-Zahl ist die Bestimmung dieser Parameter durch Titration (siehe hierzu auch E.F. Mooney, Adv. Instrum. Control 47 S. 599-615 (1992)). Die Titration von Säurezahl und OH-Zahl hat den schwerwiegenden Nachteil, daß die jeweiligen Werte mit einer gewissen zeitlichen Verzögerung erhalten werden. Zudem sind hierzu Probennahmen des Reaktionsgemisches notwendig, wobei sich in der Probe Bedingungen einstellen, die nicht unbedingt den Verhältnissen im Reaktionsraum entsprechen.

Desweiteren sind spektroskopische Methoden bekannt geworden, bei denen die Säurezahl und OH-Zahl mittels Nah-Infrarot(NIR)-Spektroskopie bzw. Nah-Infrarot-Transmissions-Spektroskopie bestimmt wurde. Im NIR-Spektralbereich sind aufgrund der größeren Halbwertsbreiten die Absorptionsbanden von Hydroxyl-OH-, Säure-OH- und C-H-Gruppen, deren Absorption temperaturabhängig ist, überlagert. Mittels numerischer Spektrenauswertemethoden (z.B. PLS-Methode, Partial Least Squares) müssen die zu bestimmenden Konzentrationen aus den Spektren ermittelt werden. Hierbei muß der Kalibrierdatensatz den Variationsspielraum der zu messenden Proben bezüglich Probenzusammensetzung und Temperatur voll umfassen. Diese Methode kann vor allem dann zu einer hohen Analysengenauigkeit führen, wenn bezüglich der Zusammensetzung sehr gut definierte Systeme vorliegen.

Eine geringere Analysengenauigkeit wird hingegen im allgemeinen dann erzielt, wenn die zu analysierenden Produkte bezüglich der Zusammensetzung nicht einheitlich sind, d.h. wenn eine größere Zahl unterschiedlicher Komponenten in unterschiedlichen Mengenanteilen in einem Gemisch vorhanden sein kann und eine separate Kalibrierung unter Berücksichtigung jeder einzelnen Komponente sowie der Temperaturabhängigkeit zu einem verhältnismäßig hohen Kalibrieraufwand führen würde.

Aufgabe der Erfindung ist es, ein Kontrollverfahren für Polykondensations- oder Polyadditionsreaktionen zu finden, das die den bekannten Verfahren anhaftenden Nachteile nicht aufweist und eine schnelle Analyse, bevorzugt sogar Echtzeitanalyse von OH-, NH- oder NCO-Gruppenzahl bzw. Säurezahl an der jeweiligen Reaktion beteiligter Reaktionspartner ermöglicht. In Kenntnis der o.g. Konzentrationen können Reaktionszeiten verkürzt und somit der Mengendurchsatz von Produktionsanlagen vergrößert werden.

Gegenstand der Erfindung ist ein Verfahren zur Kontrolle von Polykondensations- oder Polyadditionsreaktion durch Messung der OH-, NH- oder NCO-Gruppenzahl bzw. Säuregruppenzahl beteiligter Reaktionspartner, bevorzugt bei einer Temperatur größer als 50°C, mittels Infrarot-ATR-Spektroskopie, dadurch gekennzeichnet, daß die temperaturabhängige IR-Absorption der jeweiligen chemischen Gruppe bei mindestens einer Wellenzahl gemessen wird, die temperaturabhängige Eigenabsorption des ATR-Meßkristalles gemessen und durch Vergleich mit einem Temperatur-/Absorptionskalibrierwert des Meßkristalls zur Probentemperaturbestimmung und Korrektur der Temperaturabhängigkeit der Proben-Absorptionsspektren mit Hilfe der gefundenen Probentemperatur verwendet wird.

Bevorzugt erfolgt die Bestimmung der Absorption der OH-Gruppe im OH-Streckschwingungsbereich von 3100 bis 3600 cm$^{-1}$. Die Bestimmung der Absorption der NCO-Gruppe wird bevorzugt im Bereich von 2200 bis 2350 cm$^{-1}$, die Absorption der NH-Gruppen bevorzugt im Bereich von 3000 bis 3500 cm$^{-1}$ und die Absorption der Carbonsäuregruppen bevorzugt im Bereich von 2500 bis 3400 cm$^{-1}$ durchgeführt. Überlagerungen von Bandenspektren, z. B. von OH- und Säuregruppen, werden in an sich bekannter Weise mit Hilfe von Spektrenauswerteverfahren entfaltet und ausgewertet.

Die Aufnahme der Infrarot-ATR-Spektren gemäß der Erfindung erfolgt üblicherweise mit einem optisch transparenten Metalloxid Einkristall. Beispiele für geeignete Kristallmaterialien sind $Al_2O_3$, $MgO$, $TiO_2$ und $ZrO_2$. $Al_2O_3$ hat einen Brechungsindex n = 1,75, die Wellenzahl $\upsilon_o$ der langwelligen Grenze des Transmissionsbereiches ist für $Al_2O_3$ = 2700 cm$^{-1}$ ($MgO$:n = 1,68; $\upsilon_o$ = 1700 cm$^{-1}$; $TiO_2$:n = 2,6 bzw. 2,9; $\upsilon_o$ = 2200 cm$^{-1}$; $ZrO_2$:n = 2,15; $\upsilon_o$ = 1800 cm$^{-1}$)

Bevorzugt wird ein Meßkristall aus $ZrO_2$ beim erfindungsgemäßen Verfahren eingesetzt.

Besonders bevorzugt ist eine Temperaturkalibrierung des Meßkristalles über das Eigenabsorptionsspektrum des Meßkristalls insbesondere an der jeweiligen langwelligen Grenze $\upsilon_o$ des Transmissionsbereiches.

Für die ATR-Messung kann die effektive Eindringtiefe der IR-Strahlung in die Probe nach folgender Formel berechnet werden:

$$d_{eff} = \lambda \, / \, (2\pi \, n_1 \, (\sin^2\alpha - (n_2/n_1)^2)^{1/2})$$

Hierin bedeuten $n_1$ den Brechungsindex des ATR-Kristalls, $n_2$ den Brechungsindex der Probe, $\lambda$ die Wellen-länge der verwendeten IR-Strahlung, $\alpha$ den Reflexionswinkel. Die Bedingung der Totalreflektion: $\alpha > \alpha_o = \arcsin(-\frac{n_2}{n_1})$ muß hierbei erfüllt sein ($\alpha_o$ ist der Grenzwinkel der Totalreflektion).

Die effektiv durchstrahlte Schichtdicke (in Analogie zu einer Transmissionsmessung) beträgt in der Praxis typischerweise ca. 0,5 bis 10 μm. Damit sind wäßrige oder organische Systeme sowie Emulsionen im Bereich des mittleren IR-Spektrums analysierbar.

Bei der Kalibrierung einer Bestimmungsmethode ist die Wellenlängen- und Reflexionswinkelabhängigkeit der Eindringtiefe zu beachten. Dieses bedeutet, daß eine Kalibrierung, sofern keine systematische Korrektur erfolgt, immer nur für ein bestimmtes Kristallmaterial und einen bestimmten Reflexionswinkel gültig ist.

Bei der Auswahl eines Materials als ATR-Kristall sind u.a. der Transmissionsbereich, insbesondere die Wel-lenzahl $\upsilon_o$ der langwelligen Grenze des Transmissionsbereiches, die chemische Beständigkeit gegenüber dem Meßgut, die Eignung für Messungen bei höheren Temperaturen, der Brechungsindex sowie die mechanische Härte wegen der von Zeit zu Zeit gegebenenfalls notwendigen Reinigung der benetzten Kristalloberfläche zu beachten.

Als besonders geeignet zur Bestimmung der OH- und Säurezahlen und anderer genannter Parameter erwies sich u.a. aufgrund der hervorragenden Säure- und Temperaturbeständigkeit sowie der hohen Härte Zirkoniumdioxid. Zirkoniumdioxid besitzt einen gegenüber anderen für die ATR-Spektroskopie häufig benutzten Materialien wie ZnSe ($n = 2,42$) einen niedrigeren Brechungsindex ($n = 2,15$). Dies hat größere Eindringtiefen der Meßstrahlung und somit eine größere Dynamik der Messung zur Folge.

Das erfindungsgemäße Verfahren ist grundsätzlich zur Verfolgung der unterschiedlichsten Polyadditions- oder Polykondensationsprozesse geeignet. Hierbei kann die Konzentration verschiedener Reaktionspartner anhand der OH-, NH-, NCO- oder Säuregruppenzahl gegebenenfalls auch quantitativ verfolgt und unter Umständen als Online-Analyse zur Steuerung des jeweiligen Prozesses verwendet werden.

Eine geeignete ATR-Meßzelle zur Durchführung des erfindungsgemäßen Verfahrens ist z.B. in der deutschen Offenlegungsschrift DE 4 228 070 beschrieben.

## Beispiele

## Beispiel 1

Die im folgenden Beispiel angegebenen IR-ATR-Spektren wurden durchgänglich mit einer sogenannten Niederdruck-ATR-Meßzelle aufgenommen, welche in einer Bypass-Leitung zu einem Technikumsreaktor (25 l) betrieben wurde. Das heiße Reaktionsgemisch wurde mit Hilfe einer Zahnradpumpe durch die Meßzelle befördert. Die Temperatur der Meßzelle lag typischerweise innerhalb eines Intervalls von 140 bis 160°C. Zu Beginn eines jeden Batch-Ansatzes wurde das sogenannte Untergrund-Spektrum des nicht Produkt-benetzten ATR-Kristalls bei Raumtemperatur (25°C) aufgenommen.

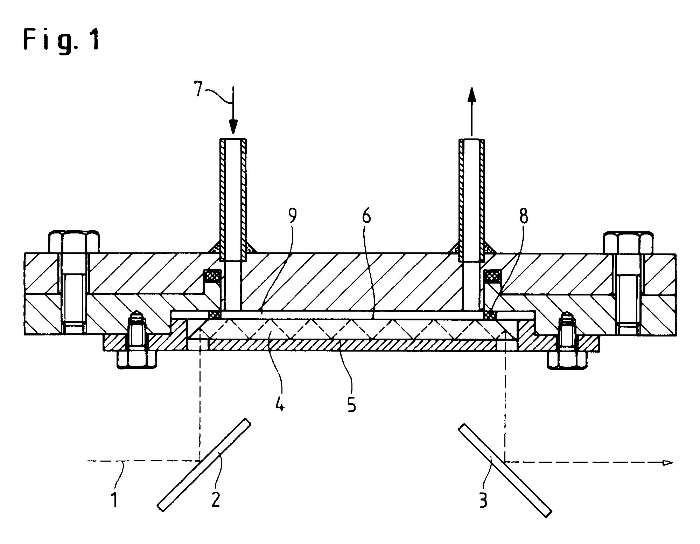

Für das nachfolgende Beispiel wurde ein Lackharz durch Polykondensation von bifunktionellen Carbonsäuren mit Alkoholen hergestellt und die Herstellung IR-spektroskopisch verfolgt. Die verwendete Niederdruck-ATR-Meßzelle ist in Fig. 1 wiedergegeben. Die IR-Meßstrahlung 1 wird mittels zweier Spiegel 2, 3 von unten in den Kristall 4 ein- bzw. ausgekoppelt. Bei der OH- bzw. Säurezahlbestimmung unter Verwendung eines Zirkoniumdioxidkristalls wurde ein Reflexionswinkel von 47,5° (entsprechend 11 Produkt-benetzten Reflexionsstellen) angewendet. Der Grenzwinkel für die Totalreflexion betrug bei einem angenommenen Brechungsindex des Meßgutes $n = 1,45$ ca. 42°. Der bei der ATR-Spektroskopie übliche Reflexionswinkel von 45° wurde vermieden, um einer typischen Winkeldivergenz des IR-Meßstrahl von 5° Rechnung zu tragen. Andererseits wurde kein wesentlich größerer Reflexionswinkel gewählt, weil dies eine Verkleinerung des Meßeffektes zur Folge hatte. Der ATR-Kristall 4 ist in ein korrosionsfestes Stahlgehäuse 5 dauerhaft eingebaut. Das zu untersuchende Reaktionsprodukt 7 strömt vom Reaktor kommend in einem engen Spalt 9 entlang der benetzten Fläche 6 des ATR-Kristalls. Der Reaktor ist nicht gezeichnet. Durch den großen Strömungsgradienten werden Ablagerungen am ATR-Kristall vermieden. Die Abdichtung des ATR-Kristalls gegenüber dem Produktstrom erfolgte durch Kalrezdichtungen 8. Durch Abnehmen des Gehäuseoberteils nach Lösen von vier Schrauben ist die benetzte Oberfläche des ATR-Kristalls zu Reinigungszwecken leicht zugänglich. Dabei wird der empfindliche Kristall aus seiner Fassung nicht entnommen. Ohne zusätzliche Justierung wird die Meßzelle nach der Reinigung in das Spektrometer zurückgesetzt. Für die Aufnahme der Spektren wurde ein Fouriertransform IR-Spektrometer Typ MB 100 der Fa. Hartmann & Braun verwendet. Die ATR-Spektren konnten mit einem sehr guten Signal-Rausch-Verhältnis aufgezeichnet werden. Es wurden bei einer spektralen Auflösung von 16 cm$^{-1}$ typischerweise jeweils 50 Interferogramme aufgenommen. Die Meßzeit zur Bestimmung der OH- bzw. Säurezahl betrug in der Regel ca. 1 Minute.

Es wurden zunächst zur Kalibrierung in stündlichem Abstand die ATR-Spektren aufgenommen und die OH- bzw. Säurezahlen der Produkte zeitgleich genommener Proben bestimmt. Auf diese Weise wurden insgesamt 29 Kalibrierspektren aufgenommen. Die ermittelte Kalibrierung besitzt aufgrund der vorliegenden Kalibrierdaten folgenden Gültigkeitsbereich:

Kristalltemperatur: 140 bis 160°C, Säurezahl muß kleiner als OH-Zahl sein und die Säurezahlen bzw. OH-Zahlen sind kleiner als 250.

Der Gültigkeitsbereich der Kalibrierung kann jederzeit erweitert werden, indem der Kalibrierdatensatz entsprechend erweitert wird. Nach jedem Ansatz wurde der Reaktor-Bypass zusammen mit dem Reaktor mit Xylol gespült. Nach Ablauf sämtlicher Versuche wurden am ATR-Kristall keinerlei Ablagerungen gefunden. Bei der Auswertung der Spektren wurden die Extinktionsdifferenzen der aufgenommenen ATR-Spektren bestimmt bei 3350-4000 cm$^{-1}$ (dominante OH-Gruppen; $\Delta E_1$), 3300-4000 cm$^{-1}$ (dominante COOH-Gruppen; $\Delta E_2$) und 2000-4000 cm$^{-1}$ (Temperatur; $\Delta E_3$) und anschließend eine dreifache lineare Regression jeweils bezüglich der OH-Zahlen und Säurezahlen durchgeführt. Durch Bildung der Extinktionsreferenzen wurden Basislinienverschiebungen kompensiert. Es wurden beispielsweise folgende Regressionsbeziehungen gefunden:

$$OH\text{-}Zahl = 583,0 \times \Delta E_1 - 69,0 \times \Delta E_2 + 74,1 \times \Delta E_3 - 59,1$$

$$Säurezahl = -100,2 \times \Delta E_1 + 413,2 \times \Delta E_2 + 166,8 \times \Delta E_3 - 37,0$$

Mit Hilfe der dieser jeweils vier durch die Regression bestimmten Konstanten war es möglich, die OH- und Säurezahl kleiner 100 mit einer Standardabweichung von 3 zu reproduzieren.

**Beispiel 2**

Es werden bifunktionelle Isocyanate wie z.B. Diphenylmethandiisocyanat (MDI), Hexamethylendiisocyanat (HDI), Isophorondiisocyanat /IPDI), Toluidendiisocyanat (TDI) oder polymere Isocyanate (sog. Prepolymere) in einem Lösungsmittel (z.B. N,N-Dimethylacetamid) mit Polyalkoholen, z.B. Polyetherpolyolen in denen an einen Initiator (mehrwertige Alkohole oder Amine) Ketten aus Ethylenoxid oder Propylenoxid angelagert sind, mit Molekulargewichten 300-6000 oder sog. Polyesterpolyole z.B. aus Adipinsäure und Glykolen oder Glycerin, umgesetzt.

Das bifunktionelle Isocyanat und der Polyalkohol werden bei einer Temperatur im Intervall 50-100°C miteinander vermischt. Bedingt durch die Exothermie der einsetzenden Polyadditionsreaktion kann die Temperatur des Gemisches während der ca. 5-15 min. andauernden Reaktion um bis zu 40°C ansteigen.

Die IR-ATR-Spektren wurden in Abständen von 30 s mit der Niederdruck-ATR-Zelle aufgenommen, die in einer Bypass-Leitung zu einem Produktionsreaktor (500 l) betrieben wurde. Das heiße Reaktionsgemisch wurde mit Hilfe einer Zahnradpumpe durch die Meßzelle gepumpt. Die Temperatur der Meßzelle lag typischerweise innerhalb des Intervalles 60-140°C. Zu Beginn eines jeden Batch-Ansatzes wurde das Background-Spektrum mit nicht benetztem ATR-Kristall bei Raumtemperatur (T=25°C) aufgenommen.

Zuvor wurden die ATR-Spektren der jeweiligen Ausgangssubstanzen unter den Bedingungen wie in Beispiel 1 bei Temperaturen von 60, 100 und 140°C aufgenommen. Es wurde die Extinktion der Isocyanat-Bande bei 2267 cm$^1$, der OH-Bande bei 3420 cm$^1$ und der Kristallabsorption bei 2000 cm$^1$ zu den jeweiligen vorgegebenen Konzentrationen einer dreifach linearen Regression unterzogen. Auf diese Weise wurde eine Temperatur-kompensierte Kalibrierung der Spektren zur Bestimmung der Konzentrationen von OH-Gruppen und Isocyanatgruppen erstellt.

Die N-H-Bande des während der Reaktion entstehenden Urethans bei 3260 cm$^1$, kann ebenfalls qualitativ oder quantitativ (nach entsprechender Kalibrierung) erfaßt werden.

Anhand der on-line während der Reaktion aufgenommenen Spektren und deren quantitativen Auswertung zur Bestimmung der Konzentrationen von OH- und Isocyanat-Gruppen kann der Reaktionsverlauf durch Nachdosieren von Isocyanat oder polymerem Alkohol gesteuert werden. Durch die hiermit ermöglichte Minimierung der Reaktionszeit werden störende Nebenreaktionen weitgehend vermieden.

**Patentansprüche**

1. Verfahren zur Kontrolle von Polykondensations- oder Polyadditonsreaktionen durch Messung der OH-, NH- oder NCO-Gruppenzahl bzw. Säuregruppenzahl beteiligter Reaktionspartner mittels Infrarot-ATR-Spektroskopie, dadurch gekennzeichnet, daß die temperaturabhängige IR-Absorption der jeweiligen chemischen Gruppe bei mindestens einer Wellenzahl gemessen wird, die temperaturabhängige Eigenabsorption des ATR-Meßkristalls gemessen und durch Vergleich mit einem Temperatur/Absorptionskalibrierwert des Meßkristalls zur Probentemperaturbestimmung und Korrektur der Temperaturabhängigkeit der Probenabsorptionsspektren mit Hilfe der gefundenen Probentemperatur verwendet wird.

2. Verfahren nach Anspruch 1, dadurch gekennzeichnet, daß die Absorption der OH-Gruppe im OH-Streckschwingungsbereich 3100 bis 3600 $cm^{-1}$, die Absorption der NCO-Gruppe im Bereich von 2200 bis 2350 $cm^{-1}$, die Absorption der NH-Gruppe im Bereich von 3000 bis 3500 $cm^{-1}$ und die Absorption der Carbonsäuregruppen im Bereich von 2500 bis 3400 $cm^{-1}$ durchgeführt wird.

3. Verfahren nach den Ansprüchen 1 bis 2, dadurch gekennzeichnet, daß die Aufnahme der Infrarot-ATR-Spektren mit einem optisch transparenten Metalloxid-Einkristall, insbesondere aus Aluminiumoxid, Magnesiumoxid, Titandioxid oder Zirkondioxid, erfolgt.

4. Verfahren nach den Ansprüchen 1 bis 3, dadurch gekennzeichnet, daß die Temperaturkalibrierung des Meßkristalles über das Eigenabsorptionsspektrum des Meßkristalls an der langwelligen Grenze $\upsilon_o$ des Transmissionsbereiches erfolgt.

5. Verfahren nach den Ansprüchen 3 bis 4, dadurch gekennzeichnet, daß als Kristallmaterial Zirkondioxid verwendet wird.

6. Verfahren nach Anspruch 5, dadurch gekennzeichnet, daß die IR-ATR-Messung durchgeführt wird unter Anwendung eines Reflexionswinkels der IR-Strahlung von > 47° und die Temperaturkalibrierung über die Eigenabsorption des $ZrO_2$ bei etwa 2000 $cm^{-1}$ erfolgt.

**Claims**

1. Process for monitoring polycondensation or polyaddition reactions by measuring the OH, NH or NCO value or acid value of participating reactants by means of infra-red ATR spectroscopy, characterised in that the temperature-dependent IR absorption of the particular chemical group is measured at at least one wavenumber, the temperature-dependent self-absorption of the ATR measuring crystal is measured and, by comparison with a temperature/absorption calibration value of the measuring crystal, is used to determine the sample temperature and to correct the temperature-dependence of the sample absorption spectra by means of the determined sample temperature.

2. Process according to claim 1, characterised in that the absorption of the OH group is performed in the OH stretching vibration range of 3100 to 3600 $cm^{-1}$, the absorption of the NCO group in the range from 2200 to 2350 $cm^{-1}$, the absorption of the NH group in the range from 3000 to 3500 $cm^{-1}$ and the absorption of the carboxylic acid groups in the range from 2500 to 3400 $cm^{-1}$.

3. Process according to claims 1 to 2, characterised in that the infra-red ATR spectra are recorded with an optically transparent metal oxide monocrystal, in particular made from aluminium oxide, magnesium oxide, titanium dioxide or zirconium dioxide.

4. Process according to claims 1 to 3, characterised in that temperature calibration of the measuring crystal is achieved by means of the self-absorption spectrum of the measuring crystal at the long-wave limit $\upsilon_o$ of the transmission range.

5. Process according to claims 3 to 4, characterised in that zirconium dioxide is used as the crystal material.

6. Process according to claim 5, characterised in that the IR ATR measurement is performed using an angle of reflection of the IR radiation of > 47° and temperature calibration is achieved by means of the self-absorption of the $ZrO_2$ at approximately 2000 $cm^{-1}$.

**Revendications**

1. Procédé de contrôle des réactions de polycondensation ou de polyaddition par mesure du nombre de groupes OH, NH ou NCO ou du nombre de groupes acide des partenaires réactionnels impliqués par spectroscopie infrarouge RTA, caractérisé en ce que l'absorption IR dépendante de la température de chaque groupe chimique est mesurée à au moins un nombre d'onde, l'absorption propre dépendante de la température du cristal de mesure RTA est mesurée et utilisée par comparaison avec une valeur d'étalonnage température/absorption du cristal de mesure pour la détermination de la température de l'échantillon et pour la correction de la dépendance à l'égard de la température des spectres d'absorption de l'échantillon à l'aide de la température de l'échantillon trouvée.

2. Procédé selon la revendication 1, caractérisé en ce que l'absorption du groupe OH a été réalisée dans le domaine des vibrations d'allongement de OH de 3100 à 3600 $cm^{-1}$, l'absorption du groupe NCO a été réalisée dans le domaine de 2200 à 2350 $cm^{-1}$, l'absorption du groupe NH a été réalisée dans le domaine de 3000 à 3500 $cm^{-1}$ et l'absorption des groupes acide carboxylique a été réalisée dans le domaine de 2500 à 3400 $cm^{-1}$.

3. Procédé selon les revendications 1 à 2, caractérisé en ce que l'enregistrement des spectres infrarouges RTA est réalisé avec un monocristal d'oxyde métallique optiquement transparent, en particulier en oxyde d'aluminium, oxyde de magnésium, dioxyde de titane ou dioxyde de zirconium.

4. Procédé selon les revendications 1 à 3, caractérisé en ce que l'étalonnage en température du cristal de mesure est réalisé sur le spectre d'absorption propre du cristal de mesure à la limite $\upsilon_o$ du domaine de transmission du côté des grandes longueurs d'onde.

5. Procédé selon les revendications 3 à 4, caractérisé en ce que le dioxyde de zirconium est utilisé comme matériau cristallin.

6. Procédé selon la revendication 5, caractérisé en ce que la mesure IR RTA est réalisée en utilisant un angle de réflexion du rayonnement IR > 47° et l'étalonnage en température est réalisé sur l'absorption propre de $ZrO_2$ à environ 2000 $cm^{-1}$.

Fig. 1